Europäisches Patentamt

(19) European Patent Office

Office européen des brevets

(11) Publication number: **0 265 814 B1**

(12) **EUROPEAN PATENT SPECIFICATION**

(45) Date of publication of patent specification: 17.07.91    (51) Int. Cl.⁵: **B25J 15/10**, B23Q 7/04, E21B 41/04

(21) Application number: 87115328.4

(22) Date of filing: 20.10.87

(54) **Retracting, aligning and fixing device.**

(30) Priority: 22.10.86 SE 8604505

(43) Date of publication of application:
04.05.88 Bulletin 88/18

(45) Publication of the grant of the patent:
17.07.91 Bulletin 91/29

(84) Designated Contracting States:
**FR GB IT NL**

(56) References cited:
CH-A- 553 630
GB-A- 1 215 830
GB-A- 2 041 263
US-A- 832 224
US-A- 2 250 440

(73) Proprietor: **AB ASEA-ATOM**

**S-721 04 Västeras(SE)**

(72) Inventor: **Andersson, Rolf Jack**
**Flitiga Lisas Väg 16**
**S-722 43 Västeras(SE)**
Inventor: **Husebye, Ragnar**
**Bugges vei 4B**

**7016 Trondheim(NO)**
Inventor: **Höglund, Kjell**
**Lavendelvägen 19**
**S-722 43 Västeras(SE)**
Inventor: **Hoyland, Sigbjorn**
**Bergliotsvei 13**
**4320 Hommersak(NO)**
Inventor: **Lindland, Hans**
**Gaupevei 28**
**4300 Sandnes(NO)**
Inventor: **Mong, Tore**
**Granatveien 9**
**4070 Randaberg(NO)**
Inventor: **Nesse, Erling**
**Knappenveien 35B**
**5064 Straumsgrend(NO)**
Inventor: **Nilsson, Tore**
**Flodinsgatan 12**
**S-722 18 Västeras(SE)**
Inventor: **Pajes, Chajkiel**
**Hakantorpsgatan 96**
**S-724 76 Västeras(SE)**

(74) Representative: **Boecker, Joachim, Dr.-Ing.**
**Rathenauplatz 2-8**
**W-6000 Frankfurt a.M. 1(DE)**

## Description

The invention relates to a retracting, aligning and fixing device according to the precharacterising part of Claim 1.

Retracting, aligning and fixing devices are known in a variety of different embodiments. Their design is normally determined by and adapted to special working machines such as different machine tools, multi-operation machines, robots, manipulators, etc. Their design is also determined by and adapted to the nature of the objects to be gripped, fixed, etc. However, characteristic of all the different embodiments is that they have some form of guiding, gripping and fixing means.

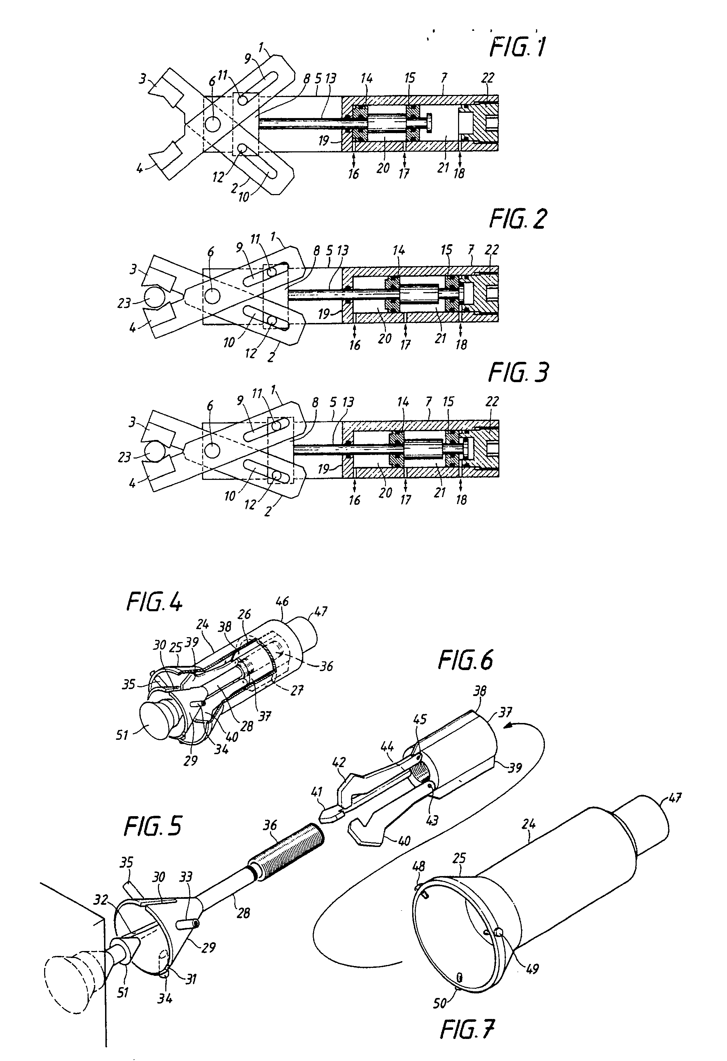

One example of a known embodiment will be given based on the SE-B-407 170 (corresponding to GB-A-2,041,263). The example shows a gripping device which is supported by a transport arm and is intended to be used in a machine tool. The actual gripping device is of the "tongs type" having two crossed gripping arms with jaws adapted to a workpiece. The arms are coupled to a yoke which, upon a rectilinear motion, effects a swinging movement of the arms so that the jaws will close around the workpiece or loosen their grip, respectively (see Figures 1 to 3).

Such gripping devices have their limitations. Two of the degrees of freedom in space are determined by where the gripping device is placed with the aid of the transport arm. If there are requirements for a retracting, aligning and fixing device which comprises all three degrees of freedom in space, more sophisticated design solutions are required.

Other and similar gripping structures are described, among other things, in the CH-A-553 630 ("Greifwerkzeug"), US-A-832,224 ("Grapple"), and US-A-2,250,440 ("Oil Well Fishing Tool").

The invention aims at devising a retraction, aligning and fixing device of the above-mentioned kind that covers all three degrees of freedom, i.e. that it can grip an object in a three-dimensional space, provided that an appropriate initial position has been occupied by the transport arm carrying the gripping device.

To achieve this aim the invention suggests a retracting, aligning and fixing device according to the introductory part of Claim 1, which is characterized by the features of the characterizing part of Claim 1.

Further developments of the invention are characterized by the features of the additional claims.

A retracting, aligning and fixing device according to the invention consists of a mechanism with a symmetrical finger-like gripper, comprising three ore more fingers and being attached to a sleeve urged by a motor-driven screw. The finger-like gripper is guided by means of wings and slots towards an inner and an outer funnel included in the device. Associated with the device is also a retraction cone, towards which funnels, fingers and sleeve are to be guided to effect alignment and fixing. Upon movement of the fingers towards the retraction cone, the finger-like gripper opens so as to create a sufficient gap for it to close around the retraction cone. By reversing the movement of the fingers, there is first obtained a substantially radial movement of the finger-like gripper for gripping and centering behind the base of the retraction cone. Then a substantially axial movement is obtained , whereby the inner funnel included in the device is pulled towards the retraction cone, which, after additional axial finger movement, is urged towards the innermost part of the inner funnel. This results in a precise positioning and fixing of the device with the attached tool, etc.

The device according to the invention has a large field of application. Besides its use within the pure engineering industry, it is particularly useful for retracting, aligning and fixing tools etc. in subsea production systems for gas and oil.

The invention will now be described in greater detail with reference to the accompanying drawings showing - by way of example - in

Figures 1, 2 and 3

an embodiment of a prior art gripping device in various stages of its operational movement;

Figure 4

in embodiment of a device according to the invention with its outer housing partly cut away,

Figures 5, 6 and 7

different parts of the device shown in Figure 4.

Figure 1 shows the afore-mentioned prior art gripping device in an open position, inserted into a machine tool. The crossed arms 1 and 2 with the jaws 3 and 4 are journalled on a shift pivot located on a plate 5. Associated with the gripping device are an operating cylinder 7 and a yoke 8 displaceable by the operating cylinder 7 and guided by the plate 5. Upon axial movement of the yoke 8, a turning of the gripping arms 1 and 2 is effected by the pivots 11 and 12 fixed to the yoke 8 and sliding in the slots 9 and 10 provided in the arms. The operating cylinder 7 has a specially formed piston rod 13 which is operated by two movable pistons 14 and 15 via the flow inlets and outlets 16, 17 and 18 into and out of the spaces 19, 20 and 21 in the operating cylinder 7.

The condition shown in Figure 1 is obtained by the space 20 communicating, via a guide valve (not shown), with a collecting vessel (not shown) and by the space 21 communicating with a pressure medium source (not shown).

Figure 2 shows a condition in which the space 21 communicates with the collecting vessel and the space 20 communicates with the pressure medium source. This causes the piston rod 13 and the yoke 8 to move to the right in the figure, the arms 1 and 2 thus being rotated about the pivot 6. By axially adjusting a plug 22 which is screwed to the end of the operating cylinder 7, the movement of the arms 1 and 2 can be adjusted so that the jaws 3 and 4 almost grip the workpiece 23 in question.

The actual gripping of the workpiece 23 is clear from Figure 3. This is accomplished by putting the space 20 in communication with the collecting vessel, the piston rod 13 being displaced further to the right and the jaws 3 and 4 gripping the workpiece 23.

An embodiment of a device according to the invention will now be described in detail with reference to the Figures 4, 5, 6 and 7.

Figure 4 shows the assembled device with its outer housing partially cut away. As will be clear the housing consists of an outer tubular part 24, which is also shown in section in Figure 4 and which changes into an outer funnel-shaped part 25. The inner envelope surface of the outer tubular part 24 is provided with axial guide slots. The embodiment according to Figure 4 has three guide slots, two of which, 26 and 27, are clear from the sectional view of the outer tubular part 24.

Concentrically in the outer cylindrical and funnel-shaped part 24, 25 there are mounted mechanisms, which are more clearly illustrated in Figures 5 and 6. According to Figure 5 these mechanisms consist of a shaft 28, at one end of which there is attached an inner funnel 29 having three slots 30, 31 and 32 as well as three means of attachment 33, 34 and 35 for attaching the inner funnel 29 to the outer funnel 25. Around the other end of the shaft 28 there is journalled an axially fixed and rotatable sleeve 36 with external threads.

From Figure 6 it is clear that the concentric mechanism also consists of an internally threaded tubular sleeve 37. On the outer envelope surface of the tubular sleeve 37 three axially extending wings are arranged. Two of these wings are shown at 38 and 39 in Figure 6. The wings are intended to run in the axial guide slots 26, 27 in the outer tubular part 24. To each one of these wings there is attached a finger 40, 41 and 42 with a hook-shaped free end, radially turnable around the attachment to the respective wing at 43, 44 and 45. The hooks (fingers) are intended to be guided and controlled in the axial direction by the slots 30, 31 and 32 of the inner funnel 29.

Attached to the end piece 45 of the outer tubular part 24 is a drive means 47 for the threaded sleeve 36.

Figure 7 also shows the fixing means 48, 49 and 50 for mounting together the two funnels 25 and 29 by means of the attachment devices 33, 34 and 35.

Figure 5 also shows an embodiment of a retraction cone 51, to which the entire device is intended to be pulled, aligned and fixed. When the operation starts, the threaded tubular sleeve 37 is in its outer axial position relative to the drive means 47. The hook-shaped movable ends of the fingers 40, 41 and 42, attached to the tubular sleeve 37, then rest in the outer end positions of the respective axial slots 30, 31, 32 of the inner funnel 29. The drive means 47 causes the sleeve 36 to rotate. This imparts an axial movement to the tubular sleeve 37, due to the guiding wings 38, 39 running in the axial slots 26, 27 in the outer tubular part 24.

In order for the docking operation to function satisfactorily, the device must have a reasonably approximate correct initial position relative to the workpiece and the retraction cone 51. When the fingers 40, 41, 42 move axially in relation to the funnels 25 and 29, the movable hook-shaped ends of the fingers 40, 41, 42 will come into contact with the retraction cone 51 and, upon continued axial movement, they will slide against the cone 51. Therefore, in addition to an axial movement, also an outward, radial movement will be imparted to the fingers 40, 41, 42.

This pattern of movement continues until the hooks of the fingers 40, 41, 42 have passed the inner edge of the retraction cone 51 facing the workpiece. The radial outward movement then undergoes a very marked change into an inward radial movement, the hooks of the fingers 40, 41, 42 closing thereby around the retraction cone 51. When this is done, the direction of rotation of the sleeve 36 is changed via the drive means 47. This causes the entire mechanism to be pulled towards and around the retraction cone 51, getting aligned relative to the cone, and finally being locked to the cone and the workpiece.

## Claims

1. Retraction, aligning and fixing device for positioning and fixing tools, measuring apparatus and the like, which are used in machine tools, robots, manipulators, the device comprising

   an outer tubular part (24) with an outer funnel-shaped portion (25), the wider end of the funnel facing away from the tubular part (24),

   a shaft (28), one end of which changes into an inner funnel (29), the wider end of the funnel facing away from the shaft (28), and the other end of the shaft (28) being provided with a journalled, axially fixed and rotatable sleeve (36) coupled to a drive means (47),

and a tubular sleeve (37) to which a number of fingers (40, 41, 42) with hook-shaped ends are substantially symmetrically attached,

the device being adapted to cooperate with a retraction cone (51) towards which the entire device is intended to be pulled, **characterized** in that the outer tubular part (24) has an inner envelope surface provided with axial guide slots (26, 27), substantially symmetrically distributed peripherally with the same pitch as the fingers (40, 41, 42), that the outer envelope surface of the rotatable sleeve (36) is provided with threads, that the inner envelope surface of the tubular sleeve (37) is provided with threads adapted to the threads of the rotatable sleeve (36), that the outer envelope surface of the tubular sleeve (37) is provided with substantially symmetrically distributed axial wings with the same pitch as the fingers (40, 41, 42), that to each wing there is attached one of said fingers with a hook-shaped end which guides the movement of the device so that the grip around the retraction cone (51) is substantially radial and centered, and then becomes substantially axial, and that the inner funnel (29) is provided with substantially symmetrically distributed guide slots (30, 31, 32) with the same pitch as the fingers, intended for guiding the fingers.

2.  Retracting, aligning and fixing device according to Claim 1, **characterized** in that it is arranged with three fingers, three wings, three axial guide slots in the outer tubular part, and three guide slots in the inner funnel, all being symmetrically distributed with a pitch of 120 degrees.

**Revendications**

1.  Dispositif de rétraction, d'alignement et de fixation pour le positionnement et la fixation d'outils, d'appareils de mesure, etc., qui sont utilisés dans des machines-outils, des robots et des manipulateurs, le dispositif comprenant :
    une partie tubulaire extérieure (24) comportant une partie extérieure en forme d'entonnoir (25), l'extrémité la plus large de l'entonnoir se trouvant du côté opposé à la partie tubulaire (24),
    une tige (28) dont une extrémité se transforme en un entonnoir intérieur (29), l'extrémité la plus large de l'entonnoir se trouvant du côté opposé à la tige (28), et l'autre extrémité de la tige (28) comportant une douille (36) montée de façon tournante, mais fixe en direction axiale, qui est accouplée à des moyens d'entraînement (47),
    et une douille tubulaire (37) sur laquelle un certaine nombre de doigts (40, 41, 42) ayant des extrémités en forme de crochets sont fixés de façon pratiquement symétrique,
    le dispositif étant conçu pour coopérer avec un cône de rétraction (51) vers lequel le dispositif entier doit être tiré, **caractérisé** en ce que la partie tubulaire extérieure (24) comporte une surface d'enveloppe intérieure qui est munie de rainures de guidage axiales (26, 27), réparties de façon pratiquement symétrique à la périphérie, avec le même pas que les doigts (40, 41, 42), en ce que la surface d'enveloppe extérieure de la douille tournante (36) · est munie d'un filetage, en ce que la surface d'enveloppe intérieure de la douille tubulaire (37) est munie d'un filetage adapté au filetage de la douille tournante (36), en ce que la surface d'enveloppe extérieure de la douille tubulaire (37) comporte des ailes axiales réparties de façon pratiquement symétrique, avec le même pas que les doigts (40, 41, 42), en ce que l'un des doigts est fixé sur chaque aile, et il comporte une extrémité en forme de crochet qui guide le mouvement du dispositif, de façon que le mouvement de préhension autour du cône de rétraction (51) soit pratiquement radial et centré, et devienne ensuite pratiquement axial, et en ce que l'entonnoir intérieur (29) est muni de fentes de guidage (30, 31, 32), réparties de façon pratiquement symétrique, avec le même pas que les doigts, qui sont destinées au guidage des doigts.

2.  Dispositif de rétraction, d'alignement et de fixation selon la revendication 1, **caractérisé** en ce qu'il comporte trois doigts, trois ailes, trois rainures de guidage axiales dans la partie tubulaire extérieure, et trois fentes de guidage dans l'entonnoir intérieur, tous ces éléments étant répartis de façon symétrique avec un pas de 120 degrés.

**Patentansprüche**

1.  Vorrichtung zum Zurückziehen, Ausrichten und Festhalten für die Positionierung und Befestigung von Werkzeugen, Meßgeräten und dergleichen, die in Werkzeugmaschinen, Robotern, Manipulatoren verwendet werden, mit

    einem äußeren rohrförmigen Teil (24) mit einem äußeren trichterförmigen Teil (25), wobei das weitere Ende des Trichters von dem rohrförmigen Teil (24) wegweist,

    einer Welle (28), deren eines Ende in einen inneren Trichter (29) übergeht, dessen weiteres Ende von der Welle (28) wegweist, während auf dem anderen Ende der Welle (28) eine axial fixierte, drehbaren Hülse (36) gelagert ist, die mit einer Antriebsvorrichtung (47) gekoppelt ist,

und einer rohrförmigen Hülse (37), an der im wesentlichen symmetrisch eine Anzahl von Fingern (40,41,41), deren Enden hakenförmig sind, befestigt ist,

welche Vorrichtung so beschaffen ist, daß sie mit einem Rückziehkonus (51) zusammenarbeitet, an welchem die gesamte Vorrichtung herangezogen werden soll, **dadurch gekennzeichnet**, daß das äußere rohrförmige Teil (24) eine innere Oberfläche hat, die mit axial verlaufenden Führungsnuten (26,27) versehen ist, die im wesentlichen symmetrisch mit gleicher Teilung wie die Finger (40,41,42) über den Umfang verteilt sind, daß die äußere Mantelfläche der drehbaren Hülse (36) mit Gewinde versehen ist, daß die innere Mantelfläche der rohrförmigen Hülse (37) mit Gewinde versehen ist, welches zu dem Gewinde der drehbaren Hülse (36) passt, daß die äußere Mantelfläche der rohrförmigen Hülse (37) mit im wesentlichen symmetrisch verteilten axialen Flügeln mit der gleichen Teilung wie die Finger (40,41,42) versehen ist, daß an jeden Flügel einer der mit hakenförmigem Ende versehen Finger angebracht ist, welcher die Bewegung der Vorrichtung so führt, daß das Greifen um den Rückziehkonus im wesentlichen radial und zentriert erfolgt und dann im wesentlichen axial wird, und daß der innere Trichter (29) mit im wesentlichen symmetrisch verteilten Führungsschlitzen (30,31,32) versehen ist, die die gleiche Teilung wie die Finger haben und zur Führung der Finger dienen.

2. Vorrichtung zum Zurückziehen, Ausrichten und Festhalten nach Anspruch 1, **dadurch gekennzeichnet**, daß die Vorrichtung versehen ist mit drei Fingern, drei Flügeln, drei axialen Führungsschlitzen im äußeren rohrförmige Teil und drei Führungsschlitzen im inneren Trichter, die alle symmetrisch mit einer Teilung von 120° angeordnet sind.

FIG. 1

FIG. 2

FIG. 3

FIG. 4

FIG. 5

FIG. 6

FIG. 7